# EUROPÄISCHE PATENTSCHRIFT

(11) **EP 1 861 912 B1**
(45) Veröffentlichungstag und Bekanntmachung des Hinweises auf die Patenterteilung: **02.12.2009**
(21) Anmeldenummer: 06707202.5
(22) Anmeldetag: 23.02.2006
(51) Int. Cl.: H02K 7/14, H02K 5/22, H02K 11/00

(54) **GEBLÄSEEINHEIT, INSBESONDERE FÜR EINEN STAUBSAUGER**
FAN UNIT, PARTICULARLY FOR A VACUUM CLEANER
ENSEMBLE SOUFFLANTE CONÇU EN PARTICULIER POUR UN ASPIRATEUR

(30) Priorität: 22.03.2005 DE 102005013774
(43) Veröffentlichungstag der Anmeldung: 05.12.2007
(73) Patentinhaber: Miele & Cie. KG, 33332 Gütersloh (DE)
(72) Erfinder: BARTSCH, Klaus, 33619 Bielefeld (DE); SICKEN, Friedhelm, 53902 Bad Münstereifel (DE); GERHARDS, Manfred, 53919 Weilerswist (DE)
(74) Vertreter: Bauch, Uwe
(86) Internationale Anmeldenummer: PCT/EP2006/001643
(87) Internationale Veröffentlichungsnummer: WO 2006/099927

(56) Entgegenhaltungen:
- DE-A1- 19 951 861
- US-A1- 2002 109 426
- US-B1- 6 203 293

## Beschreibung

Die Erfindung betrifft ein Staubsaugergebläse, bestehend aus einem elektrischen Antriebsmotor mit einem Lagertopf zur Aufnahme der Baumodule des Antriebsmotors, wie Stator, Rotor und eventuell Bürstenhalter mit Kohlebürsten, sowie aus einer vom Motor angetriebenen mindestens einstufigen Gebläseeinheit mit Leitstufe, Laufrad und Ansaughaube, wobei am Lagertopf eine Aufnahmetasche zur Halterung eines Adaptergehäuses angeordnet ist, und wobei das Adaptergehäuse eine Leiterkarte aufnimmt, auf welcher unter anderem zur Drehzahlsteuerung ein Leistungshalbleiter angeordnet ist.

Ein solches Staubsaugergebläse ist aus der DE 199 51 861 A1 bekannt. Dort ist das Adaptergehäuse in dem Bereich, der in den vom Laufrad erzeugten Luftstrom ragt, geschlossen ausgebildet. Die Anordnung von elektrischen Leistungsstellern auf der Leiterkarte ist zwar fakultativ erwähnt, jedoch nicht näher gezeigt.

US 6 203 293 offenbart eine Gebläseeinheit mit einen Adaptergehäuse.

Darüber hinaus wird eine ähnliche Gebläseeinheit beispielsweise in einem von der Anmelderin hergestellten Staubsauger Miele S 712 verwendet. Dort kommt als Leistungshalbleiter ein Triac zum Einsatz. Bei dem Miele S 712 ist eine Steuerplatine, welche den Triac, einen Thermoschalter und einen Funkentstörkondensator beinhaltet, auf die dem Laufrad gegenüberliegende Stirnfläche des Lagertopfes geschraubt. Um eine Überhitzung des Triacs zu vermeiden, kommen großflächige Kühlelemente zur Hitzeableitung zum Einsatz, welche teuer sind und außerdem die Montage komplizieren.

Der Erfindung stellt sich somit das Problem, ein Staubsaugergebläse der eingangs genannten Art zu offenbaren, bei welchem für eine optimale Kühlung des Leistungshalbleiters gesorgt ist.

Erfindungsgemäß wird dieses Problem durch ein Staubsaugergebläse mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile ergeben sich durch die Anordnung des Leistungshalbleiters im Kühlluftstrom des Laufrads. Hierdurch ist trotz eines Verzichts auf Kühlelemente eine sehr gute Wärmeabfuhr gewährleistet.

In einer vorteilhaften Ausführungsform besteht das Adaptergehäuse aus einem Unterteil und einem Deckel, und der Leistungshalbleiter ragt wenigstens teilweise durch eine im Deckel angeordnete Öffnung. Bei einer solchen Anordnung können die übrigen elektrischen und elektronischen Bauteile auf der Leiterkarte durch das Adaptergehäuse geschützt werden. Dies vereinfacht das Handling bei der Montage und verhindert eine Zerstörung dieser Teile oder ihrer Lötverbindungen auf der Leiterkarte. In zweckmäßiger Weise besitzt der Leistungshalbleiter einen metallischen Flansch, welcher aus dem Adaptergehäuse ragt. Über den Flansch erfolgt eine gute Wärmeableitung vom Leistungshalbleiter, so dass eine ausreichende Kühlung gesichert ist und auch der "Rest" des Leistungshalbleiters durch das Adaptergehäuse geschützt werden kann.

Zur Vereinfachung der Montage sollte der Deckel nach dem Einsetzen der Leiterkarte mit dem Unterteil verrastbar sein.

In einer besonders vorteilhaften Ausführungsform ist das in den Luftstrom des Laufrads ragende Teil des Leistungshalbleiters hinter einer Luftzufuhröffnung der Leitstufe angeordnet. An dieser Stelle ist der größte Luftdurchsatz vorhanden, außerdem ist die Luft kühl, da sie noch keine erwärmten Teile des Motors passiert hat.

Ein Ausführungsbeispiel der Erfindung ist in den Zeichnungen rein schematisch dargestellt und wird nachfolgend näher beschrieben. Es zeigt
- Figur 1: einen Längsschnitt durch eine erfindungsgemäß aufgebaute Gebläseeinheit;
- Figur 2: den Lagertopf der Gebläseeinheit nach Figur 1 mit Leitstufe und eingesetztem Adaptergehäuse als Einzelheit in perspektivischer Darstellung;
- Figur 3: einen Ausschnitt aus Figur 2 im Bereich des Triacs;
- Figur 4: das Adaptergehäuse samt Steuerplatine in perspektivischer Darstellung von vorn;
- Figur 5: das Adaptergehäuse samt Steuerplatine in perspektivischer Darstellung von vom mit entferntem Deckel.

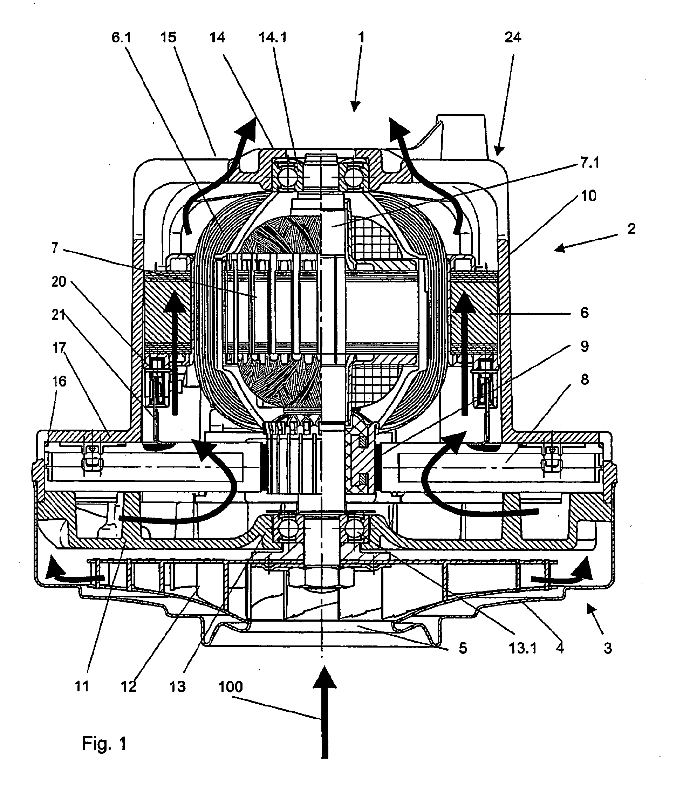

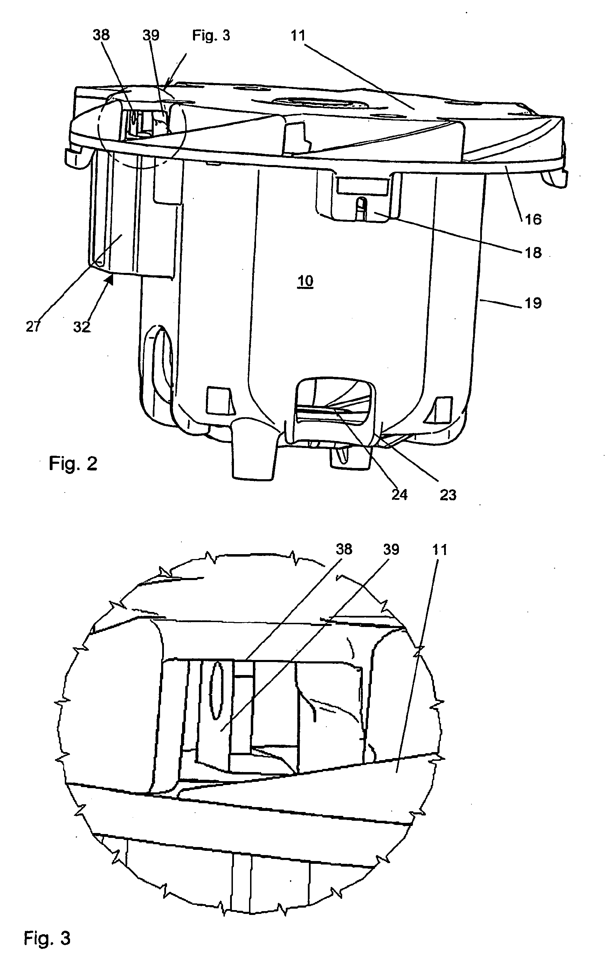

In Figur 1 ist mit 1 ein Sauggebläse für einen Staubsauger (nicht gezeigt) dargestellt, wobei das Aggregat aus einem elektrischen Antriebsmotor 2 und einer vom Motor angetriebenen Gebläseeinheit 3 besteht. Die Gebläseeinheit 3 ist von einer Ansaughaube 4 abgedeckt, welche eine Ansaugöffnung 5 für den Saugluftstrom aufweist. Ein Lagertopf 10 nimmt die bekannten Baumodule des Antriebsmotors 2, wie das bewickelte Statorpaket 6, den Rotor 7 und die Bürstenhalter 8 mit Kohlebürsten 9 auf. Die Gebläseeinheit 3 ist einstufig ausgebildet und besteht aus einer unter der Ansaughaube 4 befindlichen Leitstufe 11 und einem Laufrad 12. Die Leitstufe 11 ist zugleich der Lagertopfdeckel des Antriebsmotors 2 und ist mit einem Lagersitz 13 zur Aufnahme eines Lagers 13.1 für die Rotorwelle 7.1 ausgebildet. Das Lager 14.1 für das andere Ende der Rotorwelle 7.1 ist in einem Lagersitz 14 im Topfboden 15 des Lagertopfes 10 angeordnet. Im dargestellten Beispiel ist der Lagersitz 14 in einem im Lagertopfboden 15 ausgeformten Lagerkreuz 23 (s. Figur 2) angeordnet, welches die Luftauslässe 24 für die durch den Motor 2 geführte Gebläseluft freilässt. Selbstverständlich ist die Ausbildung als Lagerkreuz 23 nicht zwingend. Hier kann für die Saugluftausgänge auch jede andere Gestaltung des Topfbodens vorgesehen werden, wie z. B. ein geschlossener Topfboden mit seitlich im Lagertopf ausgebildeten Luftschlitzen (nicht dargestellt).

Der in Figur 2 als Einzelheit dargestellte Lagertopf 10 ist auf seiner der Leitstufe 11 zugekehrten Seite mit einem den Topf überragenden Rand 16 ausgebildet. Der so gebildete Randüberstand 17 weist eingeformte, nach oben und zum Lagertopf 10 hin offene erste Aufnahmetaschen 18 auf, in welche die Bürstenhalter 8 der Kohlebürsten 9 von oben her einlegbar sind. Mit dem Einsetzen der Bürstenhalter 8 wird zugleich durch Direktkontaktierung der Bürstenhalteranschlussstifte 21 in die Statorpaketanschlüsse 20 die elektrische Leitungsverbindung zwischen dem Rotor 7 und dem Stator hergestellt (siehe Figur 1).

Durch die Ausbildung des Lagertopfes 10 mit dem Randüberstand 16 ist es möglich, für den Sauggebläse-Antriebsmotor 2 notwendige elektrische Schalt-, Steuer- und/oder Sicherheitsfunktionen durch die Anordnung elektrischer Bauelemente innerhalb des Lagertopfes 10 zu realisieren. Für die Aufnahme dieser Bauelemente ist eine weitere, zum Inneren des Lagertopfes 10 hin offene Aufnahmetasche 27 vorgesehen.

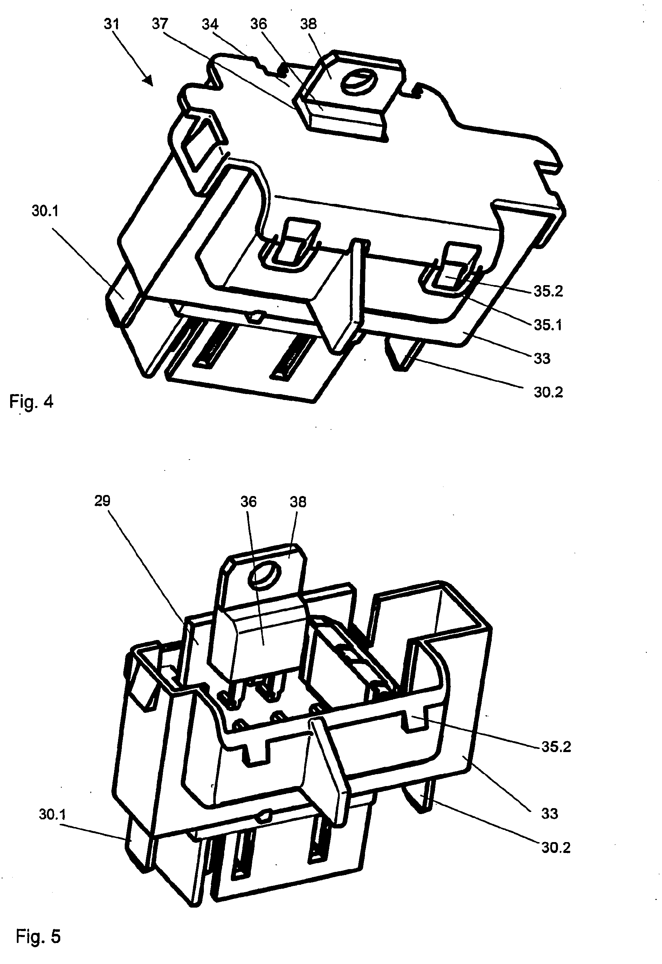

Die elektrischen Bauelemente sind auf einer Leiterkarte 29 oder Platine (siehe Figur 5) angeordnet, welche vorzugsweise auch Anschlussstifte 30.1 und 30.2 zur Direktkontaktierung mit der Statorwicklung 6.1 trägt. Die Leiterkarte 29 wird, wie in den Figuren 4 und 5 dargestellt, in ein separates Adaptergehäuse 31 eingefügt, welches seinerseits in die Aufnahmetasche 27 gesteckt wird. Die im Lagertopfmantel 19 ausgeformte Aufnahmetasche 27 ist unterseitig mit einer Steckeröffnung 32 für einen externen Steckeranschluss versehen. Die Steckeröffnung 32 durchsetzt den Mantel 19 des Lagertopfes 10 in Achsrichtung. Das Adapter-Gehäuse 31 mit der Leiterkarte 29 ist formschlüssig in die Aufnahmetasche 27 einsetzbar. Es ist zweiteilig ausgeführt und besteht aus einem Unterteil 33 und einem Deckel 34, welche nach dem Einsetzen der Leiterkarte 29 durch Rastelemente 35.1 und 35.2 miteinander verbunden werden.

Die Änderung der Motordrehzahl und damit der Gebläseleistung erfolgt über eine Phasenanschnittsteuerung, bei der über einen Triac 36 Teile der Netzspannungshalbwellen, mit denen die Ständerwicklung gespeist wird, ausgeblendet werden. Dieses Steuerungsverfahren ist an sich bekannt und wird hier nicht weiter beschrieben. Da sich der auf der Leiterkarte 29 angeordnete Triac 36 durch seine Bestromung erwärmt, ist er erfindungsgemäß im Kühlluftstrom des Laufrads 12 angeordnet, der in der Figur 1 durch die Pfeile 40 symbolisiert ist. Hierzu besitzt das Adaptergehäuse 31 in seinem Deckel 34 eine Öffnung 37, aus der der metallische Flansch 38 des Triacs 36 herausragt. Die Lage der Aufnahmetasche 27 innerhalb des Lagertopfes 10 und die Abmessungen des Adaptergehäuses 31 sind derart aufeinander abgestimmt, dass der aus dem Gehäusedeckel 34 ragende Flansch 38 des Triacs 36 direkt hinter einer Luftzufuhröffnung 39 in der Leitstufe 11 angeordnet ist. Hierdurch erfolgt über den Flansch und die den Lagertopf 10 durchströmende Luft eine Abfuhr der im Triac 36 entstandenen Wärme.

## Patentansprüche

1. Staubsaugergebläse (1), bestehend aus einem elektrischen Antriebsmotor (2) mit einem Lagertopf (10) zur Aufnahme der Baumodule des Motors (2), wie Statorpaket (6), Rotor (7) und eventuell Bürstenhalter (8) mit Kohlebürsten (9), sowie aus einer vom Motor (2) angetriebenen, mindestens einstufigen Gebläseeinheit (3) mit Leitstufe (11), Laufrad (12) und Ansaughaube (4), wobei am Lagertopf (10) eine Aufnahmetasche (27) zur Halterung eines Adaptergehäuses (31) angeordnet ist, und wobei das Adaptergehäuse (31) eine Leiterkarte (29) aufnimmt, auf welcher unter anderem zur Drehzahlsteuerung ein Leistungshalbleiter (36) angeordnet ist,
**dadurch gekennzeichnet,**
**dass** der Leistungshalbleiter (36) wenigstens teilweise aus dem Adaptergehäuse (31) in einen Bereich ragt, welcher in dem von dem Laufrad (12) erzeugten Luftstrom (40) liegt, so dass über die den Lagertopf (10) durchströmende Luft eine Abfuhr der im Leistungshalbleiter (36) entstandenen Wärme erfolgt.

2. Staubsaugergebläse nach Anspruch 1,
**dadurch gekennzeichnet,**
**dass** das Adaptergehäuse (31) aus einem Unterteil (33) und einem Deckel (34) besteht und dass der Leistungshalbleiter (36) wenigstens teilweise durch eine im Deckel (34) angeordnete Öffnung (37) ragt.

3. Staubsaugergebläse nach einem der Ansprüche 1 oder 2
**dadurch gekennzeichnet,**
**dass** der Leistungshalbleiter (36) einen metallischen Flansch (38) besitzt, welcher aus dem Adaptergehäuse (31) ragt.

4. Staubsaugergebläse nach Anspruch 2 oder 3,
**dadurch gekennzeichnet,**
**dass** der Deckel (34) nach dem Einsetzen der Leiterkarte (29) mit dem Unterteil verrastbar ist.

5. Staubsaugergebläse nach mindestens einem der Ansprüche 1 bis 4,
**dadurch gekennzeichnet,**
**dass** das in den Luftstrom (40) des Laufrads (12) ragende Teil des Leistungshalbleiters (36) hinter einer Luftzufuhröffnung (39) der Leitstufe (11) angeordnet ist.

## Claims

1. A vacuum cleaner fan (1), comprising an electric drive motor (2) having a bearing pot (2) for accommodating the component modules of the motor (2), such as a stator assembly (6), rotor (7) and, if present, brush holders (8) with carbon brushes (9), and further comprising an at least single-stage fan unit which is driven by the motor (2) and has a guide stage (11), an impeller (12), and a suction cap (4); a receiving pocket (27) for holding an adapter housing (31) being provided on the bearing pot (10), said adapter housing (31) accommodating a printed circuit board (29) on which, among other things, a power semiconductor (36) for controlling rotational speed is mounted,
**characterised in that** the power semiconductor (36) at least partially protrudes from the adapter housing (31) in a region located in the air stream (40) generated by the impeller (12), whereby the heat generated in the power semiconductor (36) is by the air flowing through bearing pot (10).

2. The vacuum cleaner fan as recited in claim 1,
wherein the adapter housing (31) includes a lower part (33) and a cover (34); and the power semiconductor (36) at least partially protrudes through an opening (37) formed in the cover (34).

3. The vacuum cleaner fan as recited in one of claims 1 or 2,
**characterised in that** the power semiconductor (36) has a metallic flange (38) which protrudes from the adapter housing (31).

4. The vacuum cleaner fan as recited in claim 2 or 3,
**characterised in that** the cover (34) can be snap-fitted to the lower part after insertion of the printed circuit board (29).

5. The vacuum cleaner fan as recited in at least one of claims 1 through 4,
**characterised in that** the portion of the power semiconductor (36) that projects into the air stream (40) of the impeller (12) is disposed behind an air supply opening (39) of the guide stage (11).

## Revendications

1. Ventilateur d'aspirateur (1), comprenant un moteur d'entraînement électrique (2) comportant un carter (10) destiné à contenir les modules du moteur (2), tels que ensemble stator (6), rotor (7) et éventuellement porte-balai (8) avec des balais de charbon (9), ainsi qu'une unité soufflante au moins mono-étagée (3) entraînée par le moteur (2) comportant un élément de guidage (11), une roue (12) et une hotte d'aspiration (4), où une poche (27) destinée à recevoir un boîtier adaptateur (31) est disposée sur le carter (10) et où le boîtier adaptateur (31) reçoit une carte de circuit imprimé (29) sur laquelle est placé un semi-conducteur de puissance (36) devant entre autres contrôler la vitesse de rotation,
**caractérisé en ce que**
le semi-conducteur de puissance (36) dépasse au moins partiellement du boîtier adaptateur (31) et se projette dans une zone située dans le souffle d'air (40) entraîné par la roue (12), de sorte à assurer l'évacuation de la chaleur crée par le semi-conducteur de puissance (36) dans le flux d'air traversant le carter (10).

2. Ventilateur d'aspirateur selon la revendication 1,
**caractérisé en ce que**
le boîtier adaptateur (31) se compose d'une partie inférieure (33) et d'un couvercle (34) et **en ce que** le semi-conducteur de puissance (36) en ressort au moins partiellement par une fente (37) pratiquée dans le couvercle (34).

3. Ventilateur d'aspirateur selon l'une des revendications 1 ou 2,
**caractérisé en ce que**
le semi-conducteur de puissance (36) comporte une bride métallique (38) qui dépasse du boîtier adaptateur (31).

4. Ventilateur d'aspirateur selon la revendication 2 ou 3,
**caractérisé en ce que**
le couvercle (34) peut s'enclencher sur la partie inférieure après l'insertion de la carte de circuit imprimé (29).

5. Ventilateur d'aspirateur selon au moins l'une des revendications 1 à 4,
**caractérisé en ce que**
la partie du semi-conducteur de puissance (36) se projetant dans le flux d'air (40) de la roue (12) est disposée derrière un orifice d'entrée d'air (39) de l'élément de guidage (11).
